# EUROPEAN PATENT APPLICATION

(11) **EP 4 692 950 A1**
(43) Date of publication of application: **11.02.2026**
(21) Application number: 25191248.1
(22) Date of filing: 23.07.2025
(51) Int. Cl.: G03G 15/043, H04N 1/42, B41J 2/47, G02B 26/12, H04N 1/053, G03G 15/04

(54) **IMAGE FORMING APPARATUS**

(30) Priority: 09.08.2024 JP 2024134333
(71) Applicant: Ricoh Company, Ltd., Tokyo 143-8555 (JP)
(72) Inventor: HIRANO, Daisuke, Kanagawa, 220-0011 (JP); MURAKAMI, Masatoshi, Kanagawa, 220-0011 (JP)
(74) Representative: SSM Sandmair

(57) **Abstract**

An image forming apparatus includes a photoconductor (106) to form an electrostatic latent image, an optical writing device (1), a first light emitter (LD), a second light emitter (LD), a reflector (103), a synchronization detector (104), and circuitry (102, 104a, 202). The optical writing device includes a first light emitter to irradiate a first light and a second light emitter to irradiate a second light. The reflector deflects the first light and the second light. The synchronization detector detects the first light and the second light to detect a writing start timing. The circuitry outputs a light-emission control signal to control light emission state, outputs multiple gain signals corresponding to the first light emitter and the second light emitter, selects one gain signal from the multiple gain signals as a gain selection signal, and switches a gain of the synchronization detector based on the one gain signal.

## Description

### BACKGROUND

### Technical Field

The present disclosure relates to an image forming apparatus.

### Related Art

Electrophotographic image forming apparatuses have been proposed that expose a photoconductor with a light emitting element such as a laser diode (LD) and reflect beams output from the LD with a rotating polygon mirror. In such electrophotographic image forming apparatuses, when the beams (laser beam) of the LD are irradiated to one end to the other end of one face of the polygon mirror, the beams are deflected in accordance with the angle of the polygon mirror to scan the photoconductor for one line.

At this time, the image forming apparatus switches the LD between on and off in accordance with input image data. By so doing, an electrostatic latent image is formed for one line on the photoconductor. The image forming apparatus repeats line scanning while rotating the photoconductor. By so doing, the image forming apparatus can form an electrostatic latent image of a desired image.

When the image forming apparatus repeats the line scanning with the laser beam for one line on the photoconductor, a writing start timing for starting the image formation is to be adjusted. In order to determine the writing start timing, a light sensor is disposed immediately upstream from the photoconductor in the scanning direction to detect the scanning position of the laser beam. The light sensor functions as a synchronization detection sensor, and the writing start timing of image data is determined based on an output signal of the synchronization detection sensor.

The light sensor is a photodiode and detects a minute current change using an amplifier and a gain resistor. The light sensor detects the presence or absence of input of the laser beam by the current change. Elements may be combined to form a circuit of the light sensor. However, a photo integrated circuit (IC) that includes a slit and a cover glass to enhance and stabilize detection accuracy is commercially available and can be employed at low cost as a light sensor.

For example, Japanese Unexamined Patent Application Publication No. 2002-113899 discloses a configuration in which the gain of a synchronization detection circuit is switched by an external signal in accordance with a set amount of light for image forming conditions for the purpose of preventing detection omission and erroneous detection when the amount of light fluctuates.

### SUMMARY

In light of the above-described disadvantages, a purpose of the present disclosure is to provide an image forming apparatus that reliably detects the synchronization of the writing start timing without causing erroneous detection due to stray light or detection omission due to an insufficient amount of light even when the amount of laser beam incident on a synchronization detector varies depending on a printing condition.

To solve the above problems, the image forming apparatus includes a photoconductor on which an electrostatic latent image is formed, an optical writing device, a first light emitter, a second light emitter, a reflector, a synchronization detector, and circuitry. The optical writing device includes the first light emitter to irradiate a first light and the second light emitter to irradiate a second light. The reflector deflects the first light and the second light. The synchronization detector detects the first light and the second light to detect the writing start timing. The circuitry outputs a light-emission control signal to control light emission state, outputs multiple gain signals corresponding to the first light emitter and the second light emitter, selects one gain signal from the multiple gain signals as a gain selection signal, and switches the gain of the synchronization detector based on the one gain signal.

According to embodiments of the present disclosure, even if the amount of the laser beam that is incident on the synchronization detector may vary depending on, for example, printing conditions, erroneous detection due to stray light and detection omission due to an insufficient amount of light do not occur. Accordingly, the image forming apparatus can reliably detect the synchronization of the writing start timing.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is diagram illustrating an optical writing device provided for an image forming apparatus;
FIGS. 2A, 2B, 2C, and 2D are diagrams each illustrating a relation between an amount of laser beam and a scanning position on a photoconductor, when the amount of the laser beam is controlled to be constant;
FIGS. 3A and 3B are diagrams each illustrating a gain selection operation using synchronization lighting signals;
FIGS. 4A and 4B are diagrams each illustrating a gain selection operation using automatic power control (APC) signals;
FIG. 5 is a diagram illustrating a waveform of a synchronization detection signal in a case in which a laser diode (LD) of each of image forming colors has multiple light emitting elements;
FIG. 6 is a diagram illustrating a circuit board arrangement of a light-emission control integrated circuit (IC) and a gain-control-signal selection circuit;
FIG. 7 is a diagram illustrating an initialization function of a gain-control-signal selection circuit;
FIG. 8 is a diagram illustrating another example of an initialization function of a gain-control-signal selection circuit;
FIGS. 9A and 9B are diagrams each illustrating operation timings of an initialization signal of a gain-control-signal selection circuit;
FIG. 10 is a diagram illustrating a configuration of an update system to update a characteristic value of a shift of a writing start timing;
FIG. 11A and 11B are diagrams each illustrating another configuration of the update system to update the characteristic value of the shift of the writing start timing, provided for the image forming apparatus;
FIG. 12A is a flowchart of a density adjustment operation;
FIG. 12B is a flowchart of a printing operation;
FIG. 13A is a flowchart of a color matching operation;
FIG. 13B is a flowchart of another example of the printing operation; and
FIG. 14 is a diagram illustrating another example of an optical writing device provided for an image forming apparatus.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below in detail of an image forming apparatus with reference to the accompanying drawings.

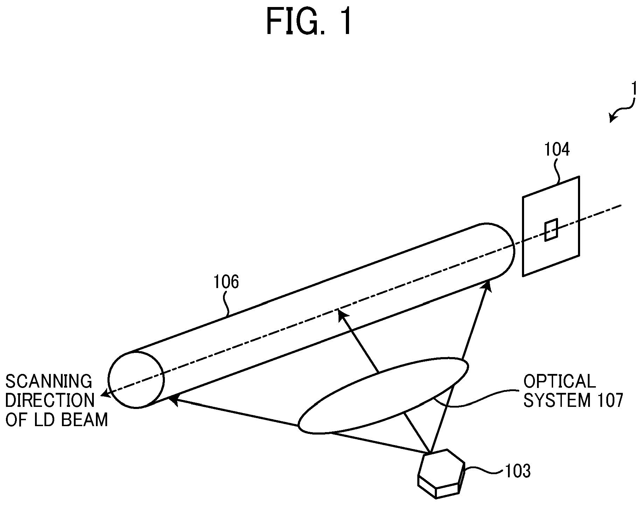

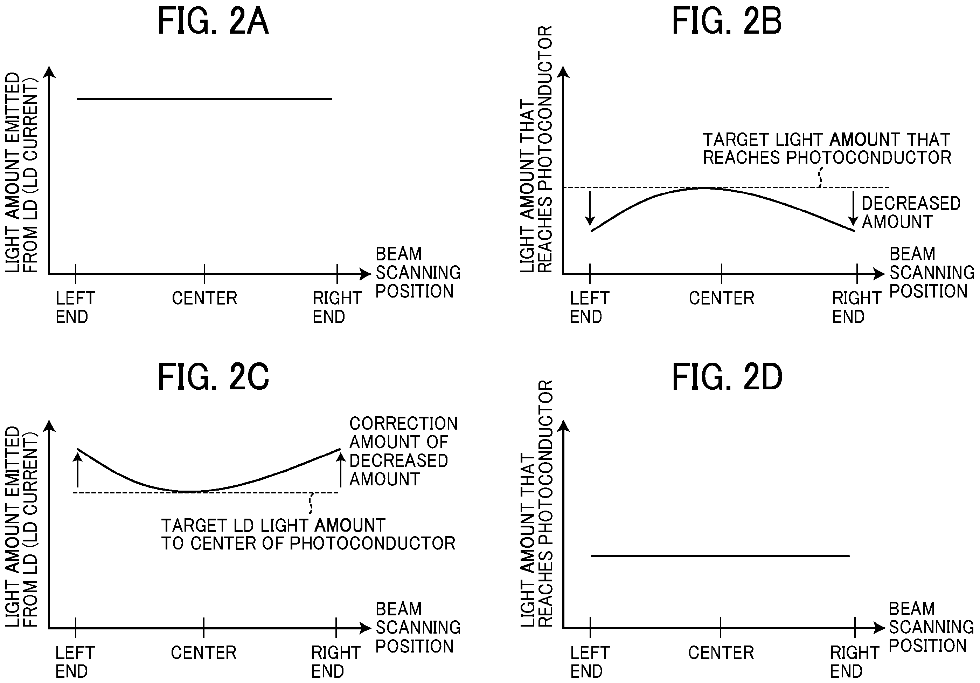

FIG. 1 is a diagram illustrating an optical writing device 1 provided for the image forming apparatus. FIGS. 2A, 2B, 2C, and 2D are diagrams each illustrating a relation between the amount of laser beam and a scanning position on a photoconductor provided for the image forming apparatus, when the amount of the laser beam is controlled to be constant. In FIGS. 2A, 2B, 2C, and 2D, the vertical axis represents the amount of laser beam emitted from a light emitting element (LD) or the amount of laser beam that reaches a photoconductor 106, and the horizontal axis represents the scanning position of the laser beam on the photoconductor 106.

The image forming apparatus according to embodiments of the present disclosure is an image forming apparatus such as an electrophotographic color image forming apparatus that develops an electrostatic latent image formed on the photoconductor 106 with a developer to form an image. The image forming apparatus includes the optical writing device 1 that exposes the photoconductor 106.

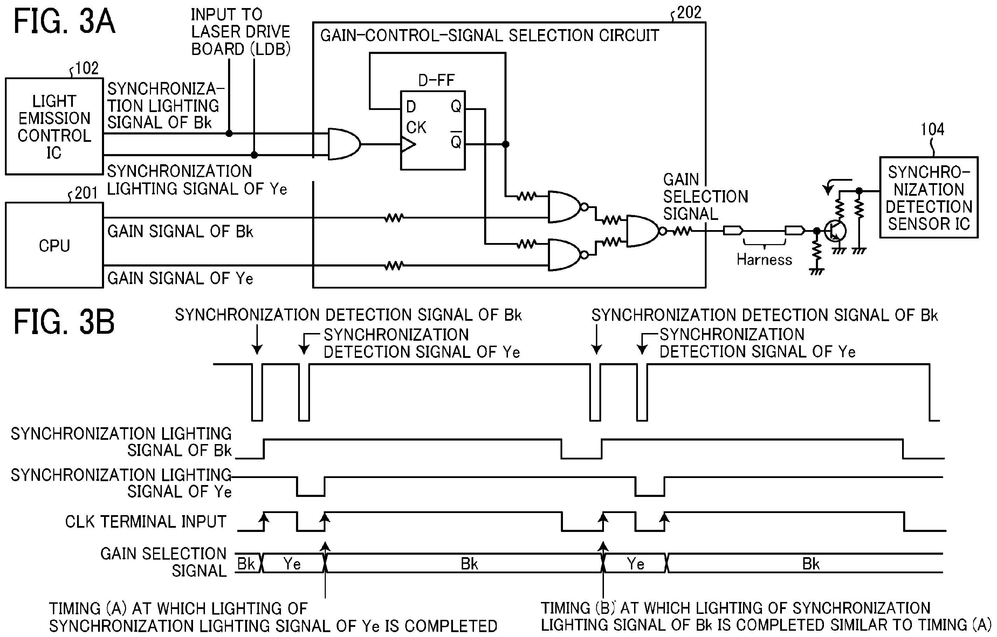

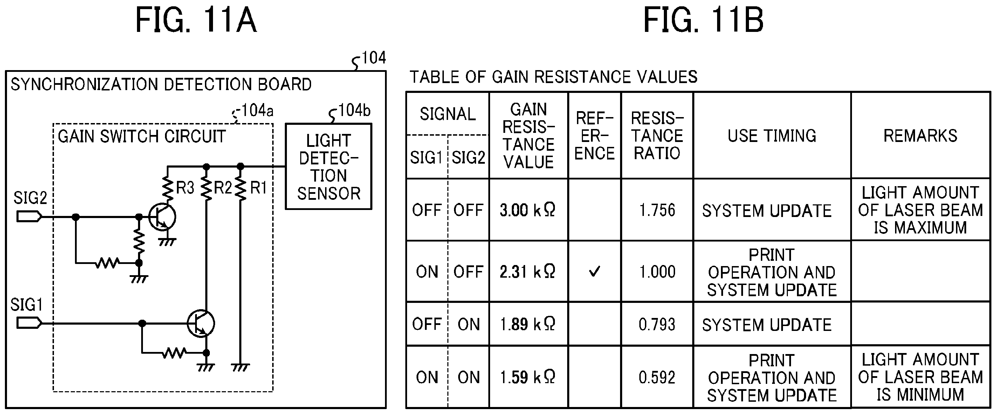

The optical writing device 1 includes a light emitting element, a light-emission control integrated circuit (IC) 102 (see FIG. 3A), a deflection element 103, a synchronization detection IC 104, and a gain switch circuit 104a (see FIG. 11A).

The light emitting element (LD) irradiates the photoconductor 106 with light. The optical writing device 1 may include multiple light emitting elements. The light-emission control IC 102 is a light-emission control element that outputs a light-emission control signal for controlling the lighting condition of the LD to light and control the LD. The deflection element 103 is a multi-face reflector and a deflection element. The deflection element 103 is disposed on an optical path in which the LD emits light and is driven to rotate to deflect the light irradiated to multiple faces of the reflector and scan the photoconductor 106 in one direction. The synchronization detection IC 104 is a synchronization detection element that serves as a synchronization detector to irradiate the photoconductor 106 with light to detect the writing start timing of an electrostatic latent image.

The synchronization detection IC 104 is irradiated with light from the light emitting element (a first light emitter) of a first color among multiple light emitting elements to form electrostatic latent images of different colors on the respective photoconductors 106 and light from the light emitting element (a second light emitter) of a second color different from the first color among the multiple light emitting elements.

In other words, the synchronization detection IC 104 is irradiated with multiple laser beams from the multiple light emitting elements via different optical paths. The different optical paths are, in a configuration in which two laser beams of the first color are irradiated to one photoconductor 106, optical paths different from the optical path through which the two laser beams are irradiated. The optical paths are optical paths from the light emitting elements to the synchronization detection IC 104.

The gain switch circuit 104a is a gain switch circuit that switches the gain of the synchronization detection IC 104.

When an electrostatic latent image is formed on the photoconductor 106, at a position farther away from the center of the photoconductor 106, smaller the amount of the laser beam that reaches the photoconductor 106 from the light emitting element due to the characteristics of the optical system 107. A driver has a correction function to increase the amount of laser beam emitted from a light emitting element at both ends of the light emitting element to prevent the amount of light from decreasing.

If the driver that has the correction function is employed, the amount of the laser beam incident on the synchronization detection board, i.e., the synchronization detection IC 104, can be made constant regardless of conditions. However, the cost increases. For this reason, in the present embodiment, a driver that controls the amount of light constantly without the correction function is employed to reduce the cost. Specifically, the light-emission control IC 102 controls the amount of light of the light emitting element to be constant while the laser beam that is irradiated to one end to the other end of one face of the deflection element 103 is scanned in one direction. Accordingly, an optical system without shading correction function can be provided at a low cost.

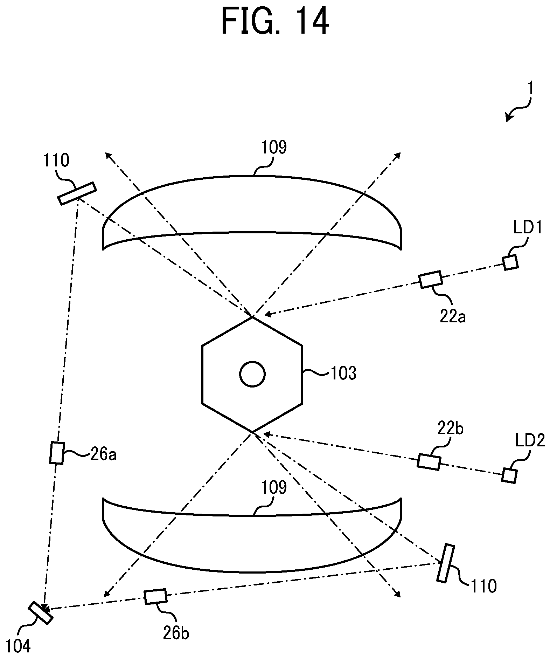

The optical writing device 1 further includes, as illustrated in FIG. 14, a first light emitting element (LD 1) for emitting first light of the first color, a second light emitting element (LD 2) for emitting second light of the second color, lenses 22a, 22b, 26a, and 26b, mirrors 110, fθ lenses 109, the synchronization detection IC 104, and the deflection element 103. The lenses 22a and 22b deflect the first light and the second light emitted from the LD 1 and LD 2, respectively, and cause the first light and the second light to be parallel to each other. The fθ lenses 109 cause the first light and the second light reflected by the deflection element 103 to be scanned at a constant angular velocity to scan the photoconductors 106 with the first light and the second light at a constant velocity. The mirrors 110 reflect the first light and the second light, which are scanned in the main scanning direction by the rotation of the deflection element 103, to the respective lenses 109. The lenses 26a and 26b cause the first light and the second light reflected from the respective mirrors 110 to be incident on the synchronization detection IC 104.

FIGS. 3A and 3B are diagrams each illustrating a gain selection operation using synchronization lighting signals, performed by the image forming apparatus. In the present embodiment, the image forming apparatus includes the light-emission control IC 102, a central processing unit (CPU) 201, a gain-control-signal selection circuit 202, and the synchronization detection IC 104.

The light-emission control IC 102 outputs a synchronization lighting signal as an example of a light-emission control signal for controlling the lighting condition of the light emitting elements. The CPU 201 is connected to the gain switch circuit 104a of the synchronization detection IC 104 and outputs a gain signal as an example of a gain control signal to set the gain of the synchronization detection IC 104.

The CPU 201 outputs multiple gain signals corresponding to the respective multiple light emitting elements. The gain-control-signal selection circuit 202 selects a gain selection signal that is one gain signal among multiple gain signals connected to the gain switch circuit 104a of the synchronization detection IC 104. The gain-control-signal selection circuit 202 is connected to the synchronization lighting signal output from the light-emission control IC 102.

In other words, the gain-control-signal selection circuit 202 selects a gain selection signal, which is one gain signal among the multiple gain signals, based on the synchronization lighting signal as an example of the light-emission control signal, output from the light-emission control IC 102. Accordingly, even when laser beams having different powers are incident on one synchronization detection IC 104, the synchronization of the writing start timing of electrostatic latent image on the photoconductor 106 can be appropriately detected. In other words, stray lights and detection omissions can be prevented.

In the gain selection operation illustrated in FIGS. 3A and 3B, laser beams of two colors of Bk and Ye are synchronized by one synchronization detection IC 104. The synchronization lighting signals of the two colors of Bk and Ye are asserted at a timing before and after the laser beams of the two colors of Bk and Ye scan the synchronization detection IC 104. The timing coincides with a timing at which the gain-control-signal selection circuit 202 selects the gain signal. Accordingly, it is reasonable to use the synchronization lighting signal in particular as the gain control signal among the light-emission control signals. In other words, the gain-control-signal selection circuit 202 may output the synchronization lighting signal of the light-emission control signal. In other words, the synchronization lighting signal may be input to the gain-control-signal selection circuit 202 as the light-emission control signal. Alternatively, a single-ended signal may be input to the gain-control-signal selection circuit 202 as the light-emission control signal.

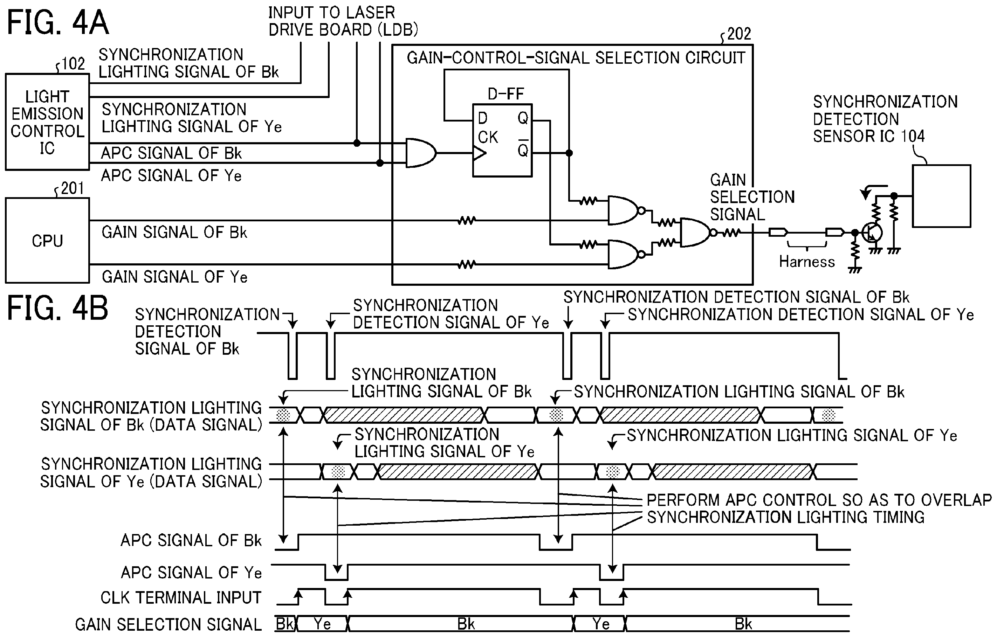

FIG. 4A is diagram illustrating a circuit configuration including the gain-control-signal selection circuit 202. FIG. 4B is diagram illustrating a waveform when an automatic power control (APC) signal is employed to perform the gain selection operation. In the present embodiment, the synchronization lighting signal is also employed as the data signal. When the synchronization lighting signal is not connected to the gain-control-signal selection circuit 202 (in other words, when the synchronization lighting signal is not input to the gain-control-signal selection circuit 202), the APC signal is employed as the data signal in place of the synchronization lighting signal.

A synchronization lighting timing, i.e., a timing at which the synchronization lighting signal is asserted, is the timing at which the gain signal is selected. For this reason, a control that employs the APC signal is performed so as to overlap, which does not necessarily completely overlap, the synchronization lighting timing. By so doing, the APC signal can be employed as the gain switching signal. In other words, the APC signal is connected (input) to the gain-control-signal selection circuit 202 as the light-emission control signal. The APC signal is asserted in the vicinity of the synchronization lighting timing. For this reason, the APC signal is suitable for switching the gain signal. The timing at which the APC signal operates may overlap the synchronization lighting timing.

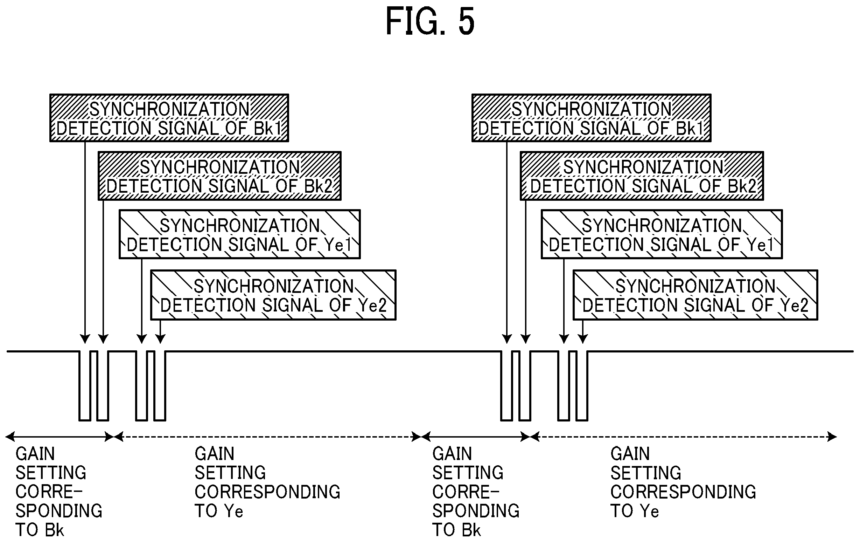

FIG. 5 is diagram illustrating a waveform of a synchronization detection signal when each of the LDs of image formation colors has multiple light emitting elements. In FIG. 5, the laser beams of two colors enter one synchronization detection board, i.e., the synchronization detection IC 104, and each of the LDs has two light emitting elements. The amount of light that is needed for image formation is common among the light emitting elements of the same color. Accordingly, making the gain signals common among the light emitting elements of the same color can reduce the circuit area of the synchronization detection IC 104.

In other words, when the optical writing device 1 includes multiple light emitting elements to irradiate one photoconductor 106, the multiple light emitting elements share the synchronization detection signal. In other words, the light-emission control IC 102 outputs the light-emission control signal based on any one of the synchronization detection signals from the synchronization detection IC 104. Accordingly, the light emitting elements of the same color share the synchronization detection signal. By so doing, the circuit area of the synchronization detection IC 104 can be reduced.

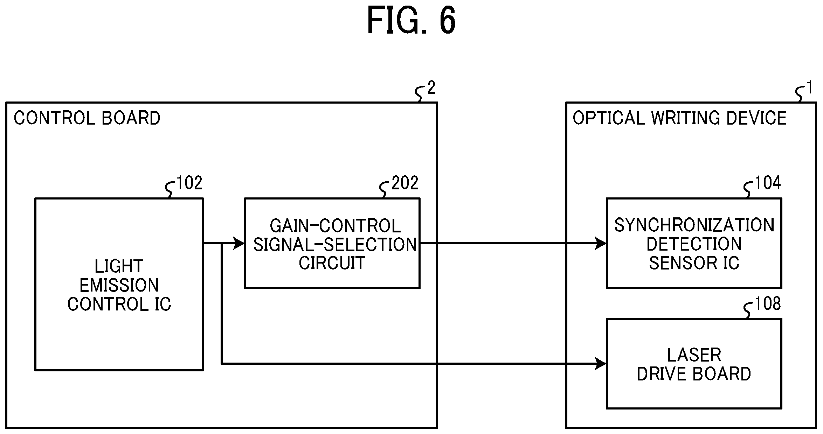

FIG. 6 is a diagram illustrating a circuit board arrangement of the light-emission control IC 102 and the gain-control-signal selection circuit 202 provided for the image forming apparatus. Typically, a control board 2 and the optical writing device 1 are separately arranged inside the image forming apparatus, and may be electrically connected to each other by a harness. The harness is likely to be affected by external noise. For this reason, the gain-control-signal selection circuit 202 and the light-emission control IC 102 are disposed on a single circuit board. By so doing, the influence of the external noise can be reduced. When multiple synchronization detection boards, i.e., the synchronization detection sensor ICs 104 and a laser driving board 108 are mounted in the optical writing device 1, the number of electric wires can be reduced.

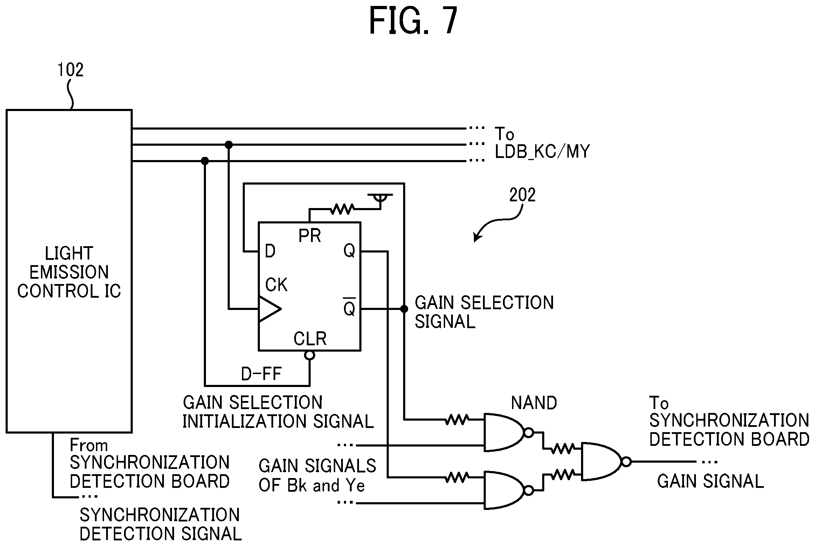

FIG. 7 is a diagram illustrating an initialization function of the gain-control-signal selection circuit 202 provided for the image forming apparatus. The gain-control-signal selection circuit 202 has an initialization function (CLR terminal in FIG. 7) to initialize the state of the gain-control-signal selection circuit 202.

Specifically, the gain-control-signal selection circuit 202 includes a D flip-flop circuit (an example of a flip-flop circuit) and a NAND (NOT AND) gate. Such a configuration allows the gain-control-signal selection circuit 202 to hold the state of the gain selection signal. When the CLR signal of the D flip-flop circuit changes to low level, the gain selection signal is reset to the initial state in accordance with the change, and the gain selection signal that is supplied to the synchronization detection IC 104 is set to the initial state. An initialization signal, i.e., a gain-selection initialization signal, that switches between enabling and disabling the initialization function is output from the light-emission control IC 102 that generates a light-emission control signal.

Accordingly, the state of the gain selection signal is initialized for each line on the photoconductor. Accordingly, the color corresponding to the gain selection signal and the color corresponding to the incident light on the synchronization detection IC 104 can match each other. The gain-control-signal selection circuit 202 is not limited to a logic IC such as a D flip-flop circuit or a NAND gate as long as the gain-control-signal selection circuit 202 has a function of switching the gain selection signal.

In the present embodiment, the light-emission control signals that lights and controls the LDs (light emitting elements) on the laser drive board (LDB) are branched and connected to the gain-control-signal selection circuit 202. One light-emission control signal that is output from the light-emission control IC 102 lights and controls the LD (light emitting device) on the LDB and also controls the gain-selection-signal initialization circuit, i.e., the gain-control-signal selection circuit 202.

If a low-voltage differential signal (LVDS) signal, i.e., a differential signal is branched and connected to the gain-control-signal selection circuit 202 as the initialization signal, a circuit load increases, a waveform is deformed to cause signal quality to deteriorate, and unnecessary radiation occurs. The LVDS signal is also employed as a signal for highspeed transmission such as a data signal to turn on or off the LD in accordance with an image to be formed in an image formation area. In particular, when the LVDS signal is connected to the data signal, the image itself may be adversely affected.

In order to prevent such an adverse effect as described above, it is desirable to branch a single-ended signal out of the light-emission control signal and connect the single-ended signal as the initialization signal, i.e., the gain-selection initialization signal. In other words, the single-ended signal out of the light-emission control signal may be employed as the initialization signal. Such a configuration can reduce the adverse effect on the waveform quality and the electromagnetic interference (EMI) as compared with the case in which the LVDS signal is employed as the initialization signal.

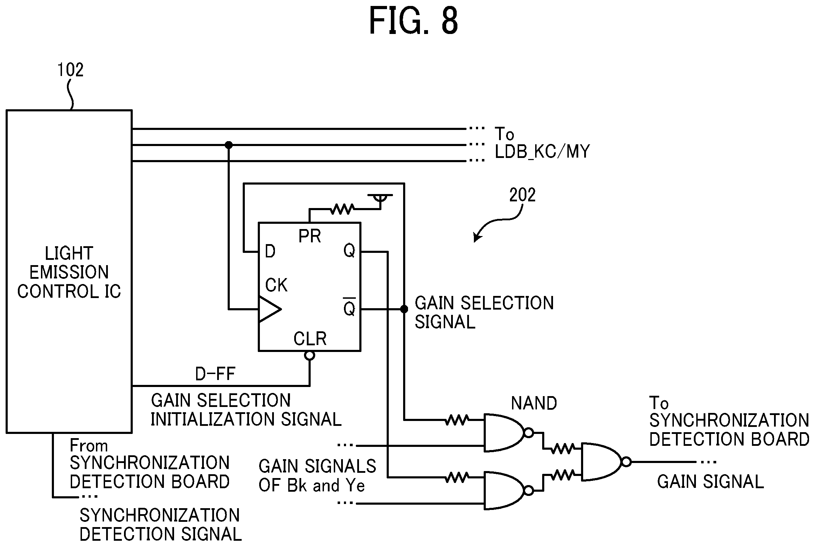

FIG. 8 is a diagram illustrating another example of the initialization function of the gain-control-signal selection circuit 202 provided for the image forming apparatus. The configuration of the gain-control-signal selection circuit 202 illustrated in FIG. 8 is different from the configuration of the gain-control-signal selection circuit 202 in FIG. 7 in that the gain-selection initialization signal output from the light-emission control IC 102 is connected to the gain-control-signal selection circuit 202 independently from the light-emission control signal for controlling the light emission of the LDs (light emitting elements) on the LDB.

In other words, the gain-selection initialization signal may be connected to the light-emission control IC 102 independently from the light-emission control signal for controlling the lighting condition of the LDs (light emitting elements). In this case, empty terminals of the light-emission control IC 102 are employed. Accordingly, a new generation circuit is not necessary. Even if the gain-selection initialization signal may be branched and connected, or connected independently from the light-emission control signal, the light-emission control IC 102 controls the initialized state of the gain selection signal in both cases.

In the configuration of the gain-control-signal selection circuit 202 illustrated in FIG. 8, the gain selection signal can be initialized at a desired timing by the gain-selection initialization signal. The light-emission control IC 102 operates in synchronization with the synchronous detection signal input from the synchronization detection IC 104. Accordingly, the light-emission control IC 102 generates the gain-selection initialization signal in accordance with the operation cycle of the synchronization detection IC 104. Thus, the light-emission control IC 102 initializes the gain selection signal. The timing of the initialization can be adjusted to a desired timing of the operation cycle.

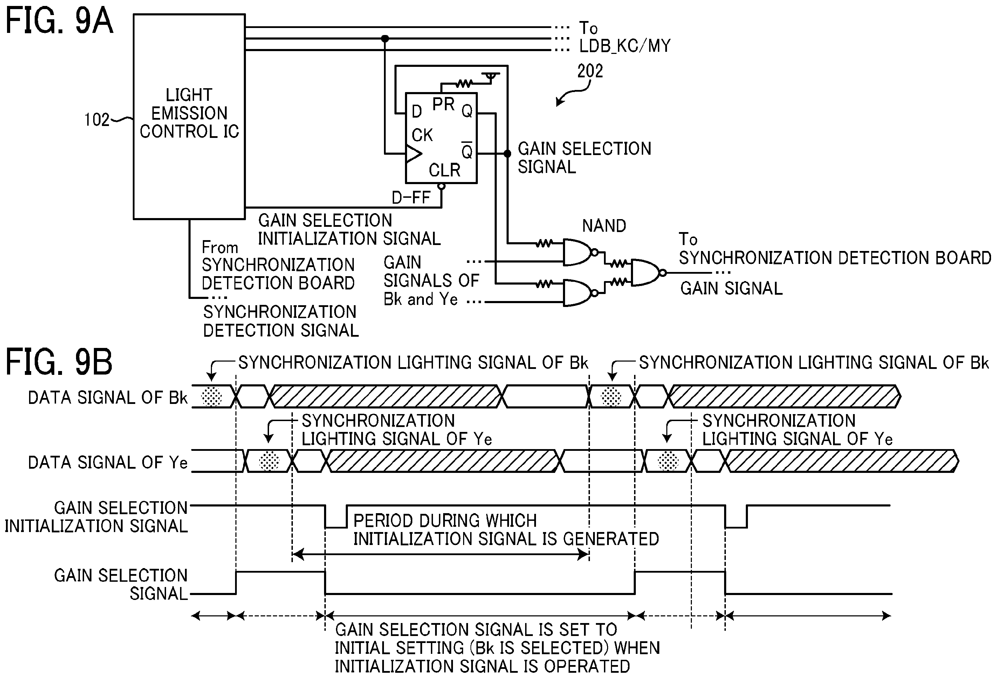

FIGS. 9A and 9B are diagrams each illustrating operation timings of the initialization signal of a gain-control-signal selection circuit 202 provided for the image forming apparatus. In the configuration of the gain-control-signal selection circuit 202 illustrated in FIG. 8, the timing at which the gain-selection initialization signal is generated is adjustable independently from the light-emission control signal such as the synchronization detection signal. The gain-selection initialization signal can be generated at any timing, once during a period from when the synchronization detection signal is asserted (= Low) to when the synchronization detection signal is asserted next (= Low).

Initializing the gain selection signal means that the optical system, i.e., the light sensor 104b on the synchronization detection IC 104, is returned to a state in which the synchronization lighting signal, i.e., the synchronization lighting signal of Bk in FIG. 9B as a frontmost signal is generated to appropriately generate the synchronization detection signal. In other words, in the present embodiment, initializing the gain selection signal means that the gain selection signal is shifted to a state in which the gain selection signal of Bk is output. In this case, the gain selection signal needs to be initialized before the synchronization lighting signal of Bk as the frontmost signal is generated.

At the same time, the gain selection signal needs to be switched such that the synchronization lighting signal as an end signal, i.e., the synchronization lighting signal of Ye in FIG. 9B to appropriately generate the synchronization detection signal. In other words, the gain selection signal needs to be initialized after the synchronization lighting signal of Ye, which is the end signal, is turned off. If the gain selection signal is initialized at a timing between the above-described two timings, i.e., during a period from when the synchronization detection signal is asserted (= Low) to when the synchronization detection signal is asserted next (= Low), the gain selection signal can be initialized in a favorable condition.

In other words, the initialization function operates when the image forming apparatus rotationally drives the deflection element 103 to form latent images for one scan on each of the multiple photoconductors 106. At this time, the photoconductor 106 on which a latent image is formed first on the time axis is a frontmost photoconductor 106, and the photoconductor 106 on which a latent image is formed last is a rearmost photoconductor 106. In this case, the initialization function is performed during a period from when the synchronization lighting signal of the rearmost photoconductor 106 is detected to when the synchronization lighting signal of the frontmost photoconductor 106 is detected. Such a configuration as described above allows the gain selection signal to be initialized at an appropriate timing. Accordingly, the image forming apparatus can be prevented from malfunctioning.

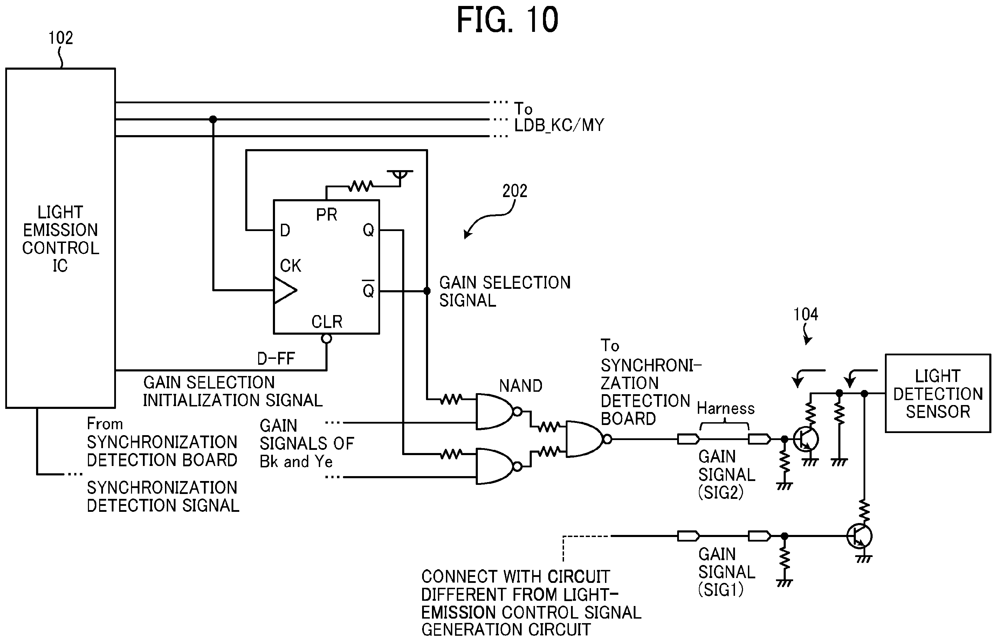

FIG. 10 is a diagram illustrating a configuration of an update system (a first update system) to update a characteristic value of a shift of a writing start timing, provided for the image forming apparatus. At least two gain signals SIG1 and SIG2 (see FIG. 10) are input to the gain switch circuit 104a of the synchronization detection IC 104. The gain signal G2 as one of the gain signals operates such that the gain is switched depending on the behavior of the light-emission control IC 102. The gain signal G1 as the other gain signal is connected to a circuit that is not affected by the behavior of the light-emission control IC 102.

The light-emission control IC 102 is a circuit that repeatedly operates in a cycle of synchronous detection. Accordingly, the other gain signal (SIG1 in FIG. 10) is a signal that does not operate or needs not to operate in the cycle of the synchronous detection signal. For example, the other gain signal (SIG1 in FIG. 10) may be employed to measure to what extent the detection timing is shifted when the amount of light irradiated to the light sensor 104b of the synchronization detection IC 104 is changed.

The other gain signal (SIG1 in FIG. 10) is fixed to the low level. Then, the detection timing of the light sensor 104b when the gain signal of Bk or Ye (SIG2 in FIG. 10) is set and the detection timing of the light sensor 104b when the other gain signal (SIG1 in FIG. 10) is fixed to the high level and the gain signal of Bk or Ye (SIG2 in FIG. 10) is set, are measured. Based on the measurement result, the characteristic value of the shift of the detection timing when the amount of light incident on the light sensor 104b changes is calculated. Then, the correction amount is calculated from the calculated characteristic value of the shift of the detection timing. As described above, at least one of the multiple gain signals is connected to a circuit different from the light-emission control IC 102 to correct the shift of the detection timing.

In other words, when the update system (the first update system) that updates the characteristic value of the shift of the image writing start timing due to the switching of the gain operates, the gain signal that is connected to a circuit different from the gain-control-signal selection circuit 202 operates. When another update system (a second update system) operates different from the update system, the logic of the control signal connected to the circuit different from the gain-control-signal selection circuit 202 is fixed. Accordingly, the image forming apparatus can form a high-quality image.

FIG. 11A and 11B are diagrams each illustrating another configuration of the update system to update the characteristic value of the shift of the writing start timing, provided for the image forming apparatus. In the present embodiment, at least two gain signals SIG1 and SIG2 (see FIG. 11A) are input to the gain switch circuit 104a of the synchronous detection board, i.e., the synchronization detection IC 104, and one of the gain signals SIG1 and SIG2 may operate such that the gain is switched by the behavior of the light-emission control IC 102.

The gain signal G1 as the other gain signal is connected to a circuit that is not affected by the behavior of the light-emission control IC 102.

The gain switch circuit 104a includes, for example, a combination of resistors and transistors.

When a gain resistor R1 is 3.0 kΩ, a gain resistor R2 is 10.0 kΩ, a gain resistor R3 is 5.10 kΩ, and the gain ratio is 1.30 or 0.69, the gain resistance value is one of four values, 3.0 kΩ, 2.31 kΩ, 1.89 kΩ, or 1.59 kΩ depending on whether the transistors are on or off. At this time, for example, it is assumed that the gain resistance values of 2.31 kΩ and 1.59 kΩ are employed for the printing operation.

When the gain resistance values of 2.31 kΩ and 1.59 kΩ are employed for the printing operation, the gain of Bk or Ye by the light-emission control IC 102 is to be switched appropriately. For this reason, preferably, the gain resistance value of 2.31 kΩ and 1.59 kΩ are selectable for the gain signal of Bk or Ye. In FIG. 11B, when the gain signal SIG1 is ON and the gain signal SIG2 is OFF, the gain resistance value is 2.31 kΩ. When the gain signal SIG1 is ON and the gain signal SIG2 is also ON, the gain resistance value is 1.59 kΩ. Accordingly, the gain signal SIG2 is connected to the light emission control IC 102.

The gain signal SIG1 is not connected to the light-emission control IC 102. However, the gain signal SIG1 is connected to, for example, an engine CPU. When the update system that updates the characteristic value of the shift of the detection timing of the light sensor 104b is operated, the output of the low level and the high level is switched. During the printing operation, the gain signal SIG1 is constantly ON, i.e., at the high level.

Such a configuration as described above allows the light-emission control IC 102 and the gain-control-signal selection circuit 202 to appropriately switch the gain signal of Bk and Ye during the printing operation. At the same time, the light-emission control IC 102 and the gain-control-signal selection circuit 202 serve as the update system for updating the characteristic value of the shift of the detection timing of the light sensor 104b. In other words, the multiple gain signals are selectable for setting the gain of the synchronization detection IC 104, and at least one of the gain signals is connected to a circuit different from the gain-control-signal selection circuit 202. Accordingly, both the gain resistance value that is employed for the printing operation and the gain resistance value that is not employed for the printing operation are selectable.

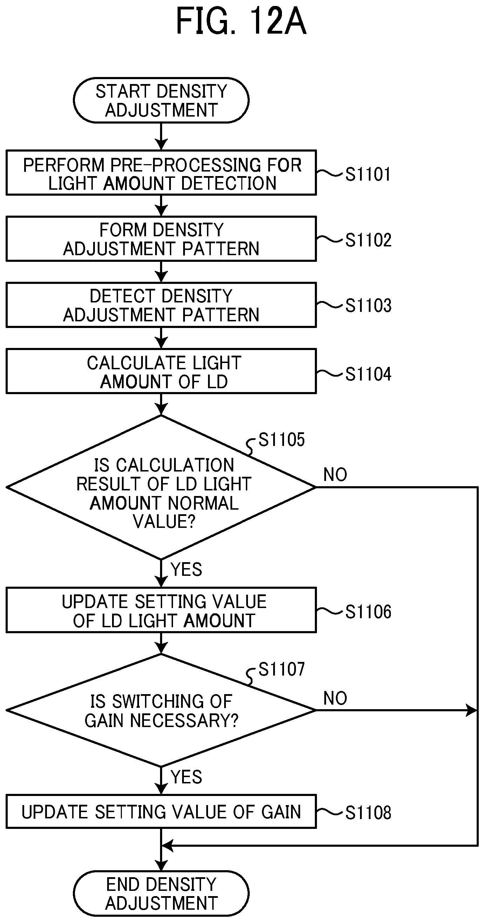

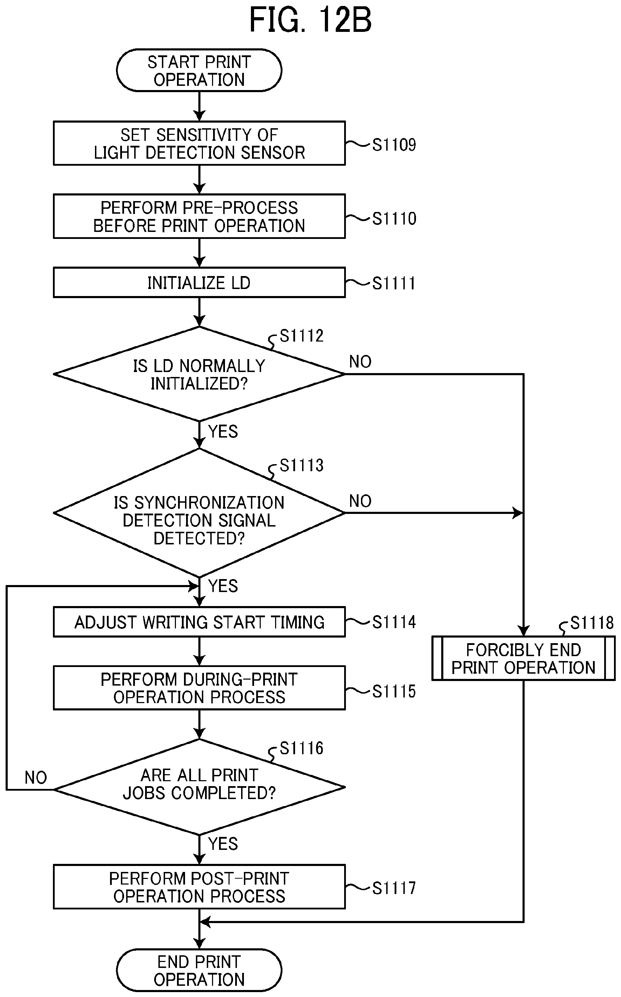

FIG. 12A is a flowchart of a density adjustment operation of the image forming apparatus. FIG. 12B is a flowchart of the printing operation of the image forming apparatus.

In the density adjustment operation illustrated in FIG. 12A, the amount of the laser beam, which is one of the image forming conditions, is adjusted. Specifically, the image forming apparatus performs a pre-detection processing of the amount of the laser beam (step S1101). Subsequently, the image forming apparatus forms a density adjustment pattern (step S1102). Subsequently, the synchronization detection IC 104 detects the density adjustment pattern (step S1103) and calculates the amount of light of the LD (light emitting element) based on the detection result of the density adjustment pattern (step S1104).

If the amount of the laser beam changes, the amount of the laser beam incident on the light sensor 104b of the synchronization detection IC 104 changes. Accordingly, whether to switch the gain of the synchronous detection IC 104 is to be determined. For this reason, the image forming apparatus determines whether the calculation result of the amount of light of the LD (light emitting element) is a normal value (step S1105).

When the amount of light of the LD is the normal value (YES in step S1105), the image forming apparatus updates the set value of the amount of light of the LD (step S1106). When it is determined that the gain needs to be switched (YES in step S1107), the image forming apparatus updates the set value of the gain (gain set value) of the synchronous detection IC 104 stored in the storage unit such as a memory (step S1108).

At this time, the number of the gain set values stored in the storage unit is equal to the number of laser beams incident on the light sensor 104b. Accordingly, the gain set values stored in the storage unit are updated according to the laser beams whose amounts are adjusted by the density adjustment operation. The gain set values that are updated by the density adjustment operation are reflected when the printing operation and the density adjustment operation are performed.

In the printing operation illustrated in FIG. 12B, the image forming apparatus first sets the sensitivity of the light sensor 104b (step S1109) and executes pre-printing processing (step S1110).

In the present embodiment, setting of the sensitivity of the light sensor 104b includes processing of reading out the gain setting values stored in the storage unit and setting the gains of the light sensors 104b to appropriate values. At this time, a gain set value for a single color is read in the case of a monochrome printing operation, and gain set values for all colors are read in the case of a full-color printing operation.

In this manner, an appropriate gain set value is set in accordance with the laser beam corresponding to each of the colors whose amount of light has been adjusted. The pre-printing processing includes setting the light-emission control IC 102 and the laser drive board 108 to turn on the LD, in addition to the rotation control of the polygon mirror, i.e., the deflection element 103. After performing the pre-printing processing, the image forming apparatus initializes the LD (step S1111).

When the LD is normally initialized (YES in step S1112), the image forming apparatus is in standby for detecting the synchronization detection signal (step S1113). When laser beams corresponding to the respective colors are sequentially incident on the light sensor 104b, the gain-control-signal selection circuit 202 as a hardware component outputs appropriate gain signals in accordance with the respective synchronous lighting timings.

When the light sensor 104b appropriately detects the laser beams and the image forming apparatus detects the synchronization detection signal (YES in step S1113), the image forming apparatus adjusts the writing start timing (step S1114) and performs an in-print processing (step S1115). Subsequently, when all the print jobs are completed (YES in step S1116), the image forming apparatus executes post-printing processing (step S1117). By contrast, when the LD is not normally initialized (NO in step S1112) and when the synchronization detection signal is not detected (NO in step S1113), the image forming apparatus forcefully terminates the printing operation (step S1118).

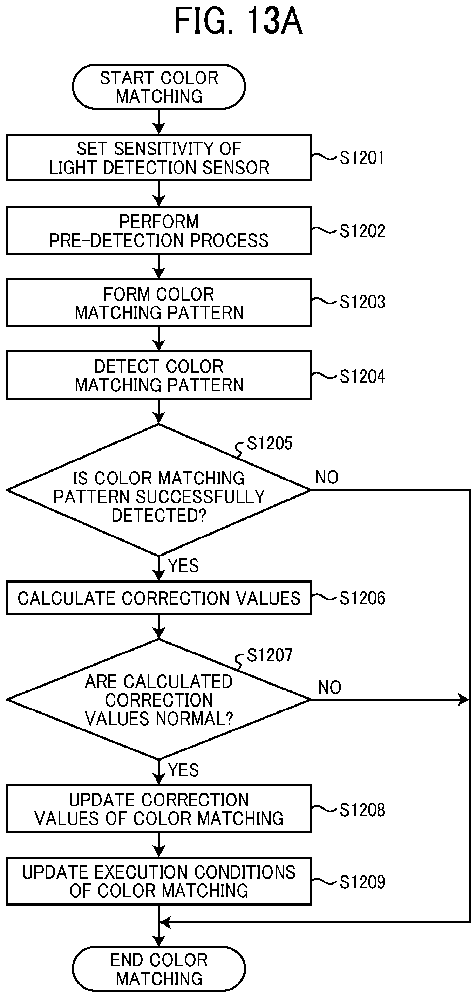

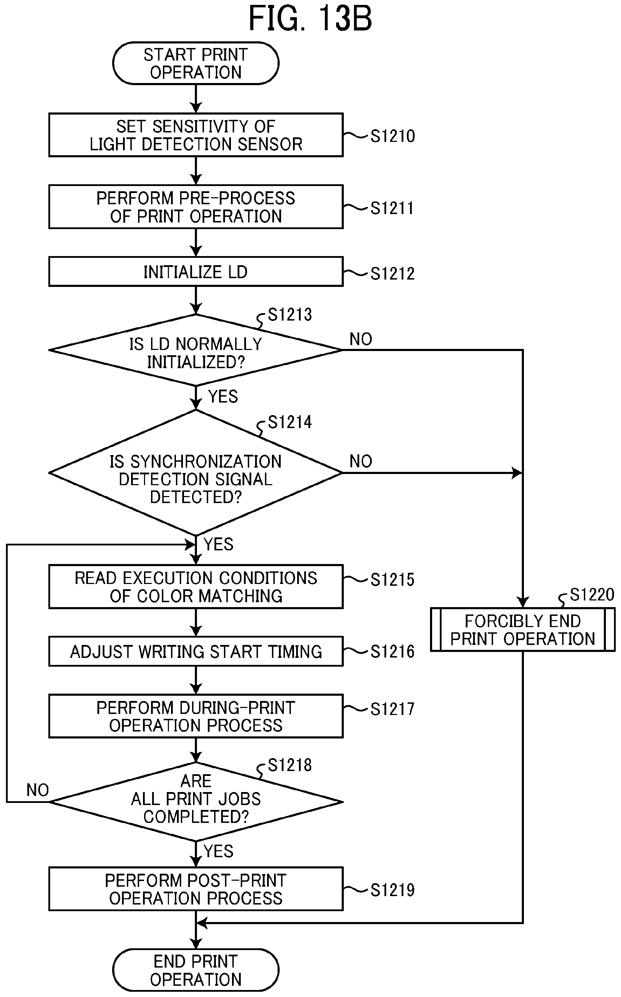

FIG. 13A is a flowchart of a color matching operation of the image forming apparatus. FIG. 13B is a flowchart of another example of the printing operation of the image forming apparatus.

In the color matching operation illustrated in FIG. 13A, the image forming apparatus sets the sensitivity of the light sensor 104b of the synchronization detection IC 104 (step S1201) and executes the pre-detection processing (step S1202). Subsequently, the image forming apparatus forms a color matching pattern (step S1203) and detects the color matching pattern (step S1204). When the color matching pattern is successfully detected (YES in step S1205), the image forming apparatus calculates correction values (step S1206).

When the calculated correction values are normal values (YES in step S1207), the image forming apparatus updates correction amounts of the color matching pattern (step S1208) and updates the execution conditions of the color matching operation (step S1209). The image forming apparatus of the present embodiment corrects the writing start timing illustrated in FIGS. 10, 11A and 11B. Accordingly, the amount of the laser beam is stored in the storage unit such as a memory when the execution condition to perform the color matching operation is updated (step S1209). The image forming apparatus illustrated in FIGS. 10, 11A, and 11B includes the update system that updates the correction amount of the color matching pattern and the execution condition of color matching operation. However, the update system may be disposed outside the image forming apparatus.

In the printing operation illustrated in FIG. 13B, the image forming apparatus first sets the sensitivity of the light sensor 104b (step S1210), and executes the pre-printing processing (step S1211).

Subsequently, the image forming apparatus initializes the LD (step S1212). When the LD is appropriately initialized (YES in step S1213) and the synchronization detection signal is detected (YES in step S1214), the image forming apparatus reads out the execution condition (for example, the amount of light stored in the storage unit) of the color matching operation at the time of the printing operation (step S1215). Subsequently, the image forming apparatus adjusts the writing start timing (step S1216) and executes the in-print processing (step S1217). For example, if there is a difference between the amount of the laser beam at the time of the color matching operation and the current amount of the laser beam, the detection timing of the light sensor 104b is shifted by the difference. For this reason, the image forming apparatus calculates a correction amount based on the characteristic value of the shift and adjusts the writing start timing (step S1216). In this regard, the printing operation illustrated in FIG. 13B is different from the printing operation illustrated in FIG. 12B.

When all the print jobs are completed (YES in step S1218), the image forming apparatus executes the post-printing processing (step S1219). By contrast, when the LD is not normally initialized (NO in step S1213) and when the synchronization detection signal is not detected (NO in step S1214), the image forming apparatus forcefully terminates the printing operation (step S1220).

As described above, in the image forming apparatus of the present embodiment, even if the amount of the laser beam incident on the synchronization detection sensor varies depending on the printing conditions, erroneous detection due to stray light and detection omission due to an insufficient amount of light do not occur. Accordingly, the image forming apparatus can reliably detect the synchronization.

Although the image forming apparatus according to the above-described embodiment is a multifunction peripheral having at least two functions of copying, printing, scanning, and facsimile transmission, aspects of the present disclosure are applicable to any image forming apparatus such as a copier, a printer, a scanner, or a facsimile machine.

A description is given below of some aspects of the present disclosure.

### First Aspect

An image forming apparatus includes a photoconductor on which an electrostatic latent image is formed to develop the electrostatic latent image with developer to form an image, and an optical writing device to expose the photoconductor.

The optical writing device includes a light emitting element to irradiate the photoconductor with light, a light-emission control element, a deflection element as a multi-face reflector, a synchronization detector, a gain switching circuit, and a gain-control-signal selection circuit.

The light-emission control element outputs a light-emission control signal for controlling lighting condition of the light emitting element to control light emission of the light emitting element.

The deflection element is disposed on an optical path on which the light is emitted from the light emitting element and rotationally driven to deflect the light irradiated to multiple faces of the reflector to scan the photoconductor in one direction.

The synchronization detector is irradiated with light from a light emitting element (a first light emitter) of a first color among the multiple light emitting elements employed for forming the electrostatic latent images of the different photoconductors and light from a light emitting element (a second light emitter) of a second color different from the first color among the multiple light emitting elements. The synchronization detector irradiates light onto the photoconductor to detect the writing start timing of the electrostatic latent image.

The gain switching circuit switches a gain of the synchronization detector.

The gain-control-signal selection circuit is connected to the light-emission control signal and selects one gain control signal from among multiple gain control signals that are connected to the gain switching circuit of a same synchronization detector and sets a gain of the synchronization detector, based on the light-emission control signal.

### Second Aspect

In the image forming apparatus according to the first aspect, the light-emission control element controls an amount of light of the light emitting element to be constant while the light that is emitted is irradiated from an end to the other end of one face of the deflection element scans in one direction.

### Third Aspect

In the image forming apparatus according to the first or second aspect, the gain-control-signal selection circuit is connected to a single-ended signal of the light-emission control signal.

### Fourth Aspect

In the image forming apparatus according to the first or second aspect, the gain-control-signal selection circuit is connected to a synchronization lighting signal of the light-emission control signal.

### Fifth Aspect

In the image forming apparatus according to the first or second aspect, the gain-control-signal selection circuit is connected to an APC signal of the light-emission control signal.

### Sixth Aspect

In the image forming apparatus according to the fifth aspect, a timing at which the APC signal operates overlaps a timing at which synchronous lighting is performed.

### Seventh Aspect

In the image forming apparatus according to any one of the first to fifth aspect, the optical writing device includes the multiple light emitting elements for irradiating one of the photoconductors, and the multiple light emitting elements share a synchronization detection signal emitted from the synchronization detector.

### Eighth Aspect

In the image forming apparatus according to any one of the first to seventh aspect, the gain-control-signal selection circuit has an initialization function for initializing the state of the gain-control-signal selection circuit, and the light emission control element outputs an initialization signal that switches between enabling and disabling of the initialization function.

### Ninth Aspect

In the image forming apparatus according the eight aspect, the initialization signal is connected to the light-emission control element independently from the light-emission control signal for controlling the lighting condition of the light emitting element.

### Tenth Aspect

In the image forming apparatus according the eight aspect, a single-ended signal of the light-emission control signal is employed as the initialization signal.

### Eleventh Aspect

In the image forming apparatus according to the ninth or tenth aspect, the deflection element is driven to rotate to form a latent image for one scan on each of the different photoconductors.

When the photoconductor on which a latent image is formed first on a time axis is a frontmost photoconductor and the photoconductor on which a latent image is formed last is a rearmost photoconductor, the initialization function is performed during a period from when the synchronization detector detects the synchronization lighting signal of the rearmost photoconductor to when the synchronization detector detects the synchronization lighting signal of the frontmost photoconductor.

### Twelfth Aspect

In the image forming apparatus according to any one of the first to eleventh aspect, the multiple gain control signals are present in the gain-control-signal selection circuit, and at least one of the gain control signals is connected to a circuit different from the gain-control-signal selection circuit.

### Thirteenth Aspect

The image forming apparatus according to the twelfth aspect includes an update system that updates a characteristic value of a shift of a writing start timing of an image. When the update system operates due to switching of a gain of the synchronization detector, the gain control signal that is connected to the circuit different from the gain-control-signal selection circuit operates. When another system different from the above-described update system operates, the logic of the gain control signal connected to a circuit different from the gain-control-signal selection circuit is fixed.

### Fourteenth Aspect

In the image forming apparatus according to any one of the first to thirteenth aspect, the gain-control-signal selection circuit and the light-emission control element are disposed on a same circuit board.

### Fifteenth Aspect

In the image forming apparatus according the ninth aspect, the gain-control-signal selection circuit includes a flip-flop circuit and a NAND gate.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present disclosure can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image forming apparatus comprising:
a photoconductor (106) to form an electrostatic latent image with developer;
an optical writing device (1) to expose the photoconductor with light, the optical writing device including:
a first light emitter (LD) to irradiate the photoconductor with a first light of a first color;
a second light emitter (LD) to irradiate the photoconductors with a second light of a second color;
a reflector (103) having multiple reflection faces to rotate in one direction to deflect:
the first light emitted from the first light emitter; and
the second light emitted from the second light emitter,
to scan the photoconductor with the first light and the second light;
a synchronization detector (104) to detect the first light and the second light to detect
a writing start timing of the electrostatic latent image on the photoconductor; and
circuitry (102, 104a, 202) configured to:
output a light-emission control signal to the first light emitter and the second light emitter to respectively emit the first light and the second light; and
control the first light emitter and the second light emitter to lighting condition of the light emitter to control light emission of the light emitter;
switch a gain of the synchronization detector; and
select one gain selection signal among the multiple gain signals connected to the gain switch circuit of the one synchronization detector based on the light-emission control signal.

2. The image forming apparatus according to claim 1,
wherein the circuitry (102) controls the first light emitter (LD) and the second light emitter (LD) to emit the first light and the second light at a constant light amount while scanning the photoconductor with the first light and the second light in one direction.

3. The image forming apparatus according to claim 1 or 2,
wherein the circuitry (202) is further configured to output a single-ended signal as the light-emission control signal to select the one gain control signal from the multiple gain control signals.

4. The image forming apparatus according to claim 1 or 2,
wherein the circuitry (202) is further configured to output a synchronization lighting signal as the light-emission control signal.

5. The image forming apparatus according to claim 1 or 2,
wherein the circuitry (202) is further configured to output an automatic power control (APC) signal as the light-emission control signal.

6. The image forming apparatus according to claim 5,
wherein the circuitry (202) is further configured to output the APC signal at a timing overlapping with a timing of asserting the synchronization lighting signal.

7. The image forming apparatus according to claim 1,
wherein the optical writing device (1) includes:
multiple first light emitters (LD) including the first light emitter each emitting the first light; and
multiple second light emitters (LD) including the second light emitter each emitting the second light, and
the synchronization detector (104) detects the first light emitted from each of the multiple first light emitters and the second light emitted from the multiple second light emitters.

8. The image forming apparatus according to claim 1,
wherein the circuitry (202) has an initialization function to initialize a state of the circuitry, and
the circuitry (102) outputs an initialization signal that switches between enabling and disabling the initialization function.

9. The image forming apparatus according to claim 8,
wherein the circuitry (202) is further configured to output the initialization signal independently from the light-emission control signal.

10. The image forming apparatus according to claim 8,
wherein the circuitry (202) is further configured to output a single-ended signal as the light-emission control signal to initialize the gain selection signal.

11. The image forming apparatus according to claim 9 or 10, further comprising:
multiple photoconductors (106) including the photoconductor,
wherein the circuitry is further configured to:
rotate the reflector (103) to form a latent image for one scan on each of the multiple photoconductors (106); and
output the initialization signal during a period:
from when the synchronization detector (104) detects the light-emission control signal of a rearmost photoconductor; and
to when the synchronization detector detects the light-emission control signal of a frontmost photoconductor,
where the frontmost photoconductor is the photoconductor on which a latent image is formed first, and
the rearmost photoconductor is the photoconductor on which a latent image is formed last.

12. The image forming apparatus according to claim 1,
wherein the circuitry (104) includes a gain selection circuit (104a) to select the one gain signal from the multiple gain signals as the gain selection signal, and
the circuitry is further configured to output at least one of the multiple gain signals to a circuit different from the gain selection circuit.

13. The image forming apparatus according to claim 12, further comprising:
a first update system to update a characteristic value of a shift of the writing start timing of an image due to switching of the gain of the synchronization detector; and
a second update system different from the first update system,
wherein the first update system outputs a gain control signal to the circuit different from gain selection circuit, and
the second update system fixes a logic of the gain control signal output to the circuit different from the gain selection circuit.

14. The image forming apparatus according to claim 1,
wherein the circuitry (202) on a circuit board:
outputs the light-emission control signal to the first light emitter and the second light emitter; and
select the one gain signal from the multiple gain signals based on the light-emission control signal.

15. The image forming apparatus according to claim 8,
wherein the circuitry (202) includes:
a flip-flop circuit; and
a NAND gate.
